**Europäisches Patentamt**

**European Patent Office**

**Office européen des brevets**

(11) Veröffentlichungsnummer: **0 241 452 B1**

# EUROPÄISCHE PATENTSCHRIFT

(45) Veröffentlichungstag der Patentschrift: **13.05.92**

(51) Int. Cl.5: **A63H 27/10**, G09F 21/10

(21) Anmeldenummer: **85904960.3**

(22) Anmeldetag: **03.10.85**

(86) Internationale Anmeldenummer:
**PCT/DE85/00344**

(87) Internationale Veröffentlichungsnummer:
**WO 86/02574 (09.05.86 86/10)**

---

(54) **ZUSATZVORRICHTUNG EINES AUFBLASBAREN GASBALLONS.**

---

(30) Priorität: **29.10.84 DE 3439524**
**07.12.84 DE 3444674**
**12.12.84 DE 8411530 U**
**06.02.85 DE 8503258 U**
**21.02.85 DE 8504956 U**
**04.03.85 DE 8506181 U**
**02.08.85 DE 8522395 U**
**02.08.85 DE 8522394 U**
**20.09.85 DE 8526946 U**

US-A- 3 836 761

(73) Patentinhaber: **HIERAT, Alexander**
**Hagngasse 47**
**W-8182 Bad Wiessee(DE)**

(72) Erfinder: **Neumeier, Robert**
**verstorben**
**(DE)**

(43) Veröffentlichungstag der Anmeldung:
**21.10.87 Patentblatt 87/43**

(45) Bekanntmachung des Hinweises auf die
Patenterteilung:
**13.05.92 Patentblatt 92/20**

(84) Benannte Vertragsstaaten:
**AT BE CH DE FR GB IT LI LU NL SE**

(56) Entgegenhaltungen:
**BE-A- 628 762**        **CH-A- 155 260**
**DE-A- 2 356 485**      **DE-A- 3 015 962**
**US-A- 3 233 093**      **US-A- 3 355 627**

EP 0 241 452 B1

**Beschreibung**

Die Erfindung betrifft eine aus der DE-A- 30 15 962 bekannte Zusatzvorrichtung eines aufblasbaren Gasballons, der einen elastisch aufweitbaren schlauchförmigen Ballonhals zum Aufblasen des Ballons aufweist, mit einem Verschlußkopf für den Ballonhals des aufgeblasenen Ballons und mit einer elektrischen Lampe zur Innenbeleuchtung des Ballons, wobei am Verschlußkopf ein nach außen verschließbarer Gaszuführkanal zum Aufblasen des Gasballons durch den Verschlußkopf hindurch ausgebildet ist und die Lampe über elektrische Leitungsverbindungen mit einer äußeren elektromechanischen Kupplung zum elektrischen Anschließen der Lampe an eine elektrische Stromquelle verbunden ist.

Die Erfindung ist für handelsübliche, durchscheinende Gasballons wie Spielzeug-Luftballons, Ballons für Werbezwecke und zur Dekoration u. dgl. vielseitig verwendbar.

Eine bekannte Zusatzvorrichtung zum Abdichten des Füllstutzens eines aufgeblasenen Luftballons und zu dessen Innenbeleuchtung (DE-A 30 15 962) weist einen Verschlußkopf auf, der abdichtend in den Ballonhals eines Luftballons eingeschoben werden soll, wonach der Luftballon durch den Verschlußkopf hindurch aufgeblasen wird. Zur Innenbeleuchtung des Ballons ist an dem Verschlußkopf ein die Lampe tragender stangenförmiger Lampenträger ausgebildet, der etwa bis zur Mitte des aufgeblasenen Luftballons in diesen hineinragt. Daher muß die Länge des Lampenträgers größer als die Länge der noch nicht aufgeblasenen Ballonhülle sein, wodurch das abdichtende Aufziehen des Ballonhalses der Ballonhülle auf den Verschlußkopf kompliziert wird. Hierbei trifft nämlich der Scheitel der Ballonhülle auf dem in diese eingeführten Lampenträger auf, bevor der Ballonhals bis in seine Endlage auf den Verschlußkopf aufgezogen ist, so daß die Ballonhülle beim weiteren Aufziehvorgang gedehnt werden muß und daher die Dehnkräfte dem weiteren Aufziehvorgang entgegenwirken. Überdies besteht hierbei die Gefahr, daß die dünne Ballonhülle aus Gummi von dem Lampenträger durchspießt wird. Außerdem ist der Fertigungsaufwand der bekannten Zusatzvorrichtung insgesamt verhältnismäßig hoch.

Durch die Erfindung wird erreicht, eine Zusatzvorrichtung für Gasballons zu deren Innenbeleuchtung bei einfacher Konstruktion zu schaffen, so daß die Zusatzvorrichtung als Massenartikel hergestellt und angewendet werden kann. Außerdem soll der Verschlußkopf der Zusatzvorrichtung einfach und mühelos in den Ballonhals einführbar sein.

Gemäß der Erfindung ist der Verschlußkopf für den Ballonhals des Ballons als becherförmiges Gehäuse ausgebildet, welches mit seinem offenen Ende voraus unter elastischer Aufweitung des Ballonhalses abdichtend in den Ballon einführbar ist. Im offenen Ende des Gehäuses ist ein Lichtreflektor angeordnet, von welchem die elektrische Lampe umgeben ist. Der Gaszuführkanal zum Aufblasen des Luftballons durch den Verschlußkopf hindurch mündet am geschlossenen Ende des Gehäuses nach außen, während eine den Reflektor passierende Gasdurchtrittsöffnung ausgebildet ist.

Durch die Becherform des erfindungsgemäßen Verschlußkopfes ist dieser materialsparend gestaltet und ist es ermöglicht, den Innenraum des Verschlußkopfes zur Unterbringung der Bauteile zur Halterung der Lampe im offenen Ende des Verschlußkopfes auszunutzen, deren Anschlußleitungen durch den Becherboden verhältnismäßig einfach gasdicht herausgeführt werden können. Durch den Lichtreflektor rings der Lampe wird eine gute Ausleuchtung des Innenraums des Ballons erreicht, obwohl die Lampe nicht in der Ballonmitte sondern am ballonseitigen Ende des Ballonhalses angeordnet ist.

Die Umfangsfläche des Verschlußkopfes ist im wesentlichen zylindrisch, vorzugsweise kreiszylindrisch; sie kann jedoch auch etwas kegelförmig sein. Der Durchmesser des Verschlußkopfes ist größer als derjenige des Ballonhalses bei nicht aufgeblasener Ballonhülle und so groß, daß der Ballonhals auf der Außenumfangsfläche des Verschlußkopfes sich im elastisch aufgeweiteten Zustand befindet und daher elastisch gasdicht gegen den Verschlußkopf angeschmiegt wird. Vorzugsweise ist der Außendurchmesser des Verschlußkopfes etwa doppelt so groß wie der Durchmesser des Ballonhalses der nicht aufgeblasenen Ballonhülle. Der Verschlußkopf ist verhältnismäßig kurz. Die Länge seines Bechermantels braucht nicht oder nur wenig länger als der elastisch aufgeweitete Ballonhals der Ballonhülle zu sein. Das Einführen des Verschlußkopfes in den Ballonhals kann in einfacher Weise dadurch geschehen, daß zunächst der Ballonhals zu einem Ringwulst zusammengerollt wird, der dann aufgedehnt und auf das offene Ende des Verschlußkopfes aufgezogen wird, wonach der Ringwulst auf der Mantelfläche des Verschlußkopfes wieder entrollt wird.

Da außerdem gemäß der Erfindung am Ende der zur Lampe im Verschlußkopf führenden Leitungsverbindungen eine elektromechanische Kupplung ausgebildet ist, können mit demselben Handgriff die mechanische Festlegung des Verschlußkopfes an einer Halterung und die elektrische Verbindung zwischen einer externen Stromquelle und der Lampe hergestellt werden. Die elektromechanische Kupplung kann als Steckkupplung ausgebildet sein, ist jedoch vorzugsweise eine Drehkupplung wie eine Bajonettkupplung oder insbesondere eine Schraubkupplung.

In der besonders bevorzugten Lösung ist die elektromechanische Kupplung ein Lampenschraubsockel in der Größe der Lampenschraubsockel handelsüblicher Glühbirnen. Hierdurch kann das Anschließen der Lampe im Verschlußkopf an jede passende Stromquelle erfolgen, welche als Gegenkupplung für den Lampenschraubsockel eine Lampenschraubfassung aufweist. Gleichzeitig ist kein elektrischer Schalter zum Herstellen oder Unterbrechen der Stromzufuhr zu der Lampe erforderlich, weil hierzu der Lampenschraubsockel lediglich etwas verdreht zu werden braucht, um den elektrischen Kontakt zwischen dem Zentralpol des Lampenschraubsockels und demjenigen der Lampenschraubfassung zu schließen bzw. zu öffnen, ohne dabei die mechanische Kupplung des Verschlußkopfes und damit des Ballons an dessen Halterung zu lösen.

Das erfindungsgemäße Lösungsprinzip eignet sich für alle Zwecke, bei denen Gasballons mit Innenbeleuchtung erwünscht sind. So kann die erfindungsgemäße Zusatzvorrichtung für das Beleuchten von Kinderluftballons gestaltet sein und ein Griffgehäuse mit darin enthaltener elektrischer Batterie und Lampenfassung für den Lampenschraubsockel aufweisen, mit dem der Verschlußkopf über ein Leitungskabel oder ein Tragrohr verbunden ist. Die Lampe kann auch für den Betrieb aus dem Stromnetz ausgelegt werden und der Lampenschraubsockel kann in seiner Größe so ausgebildet werden, daß er in eine für Glühlampen, die für den Betrieb aus dem Stromnetz vorgesehen sind, übliche Lampenfassung paßt. In diesem Fall kann der Verschlußkopf direkt in eine Lampenfassung einer Lampenkette eingeschraubt werden, wie sie z.B. zur Dekoration in Gaststättenbetrieben oder zur elektrischen Christbaumbeleuchtung verwendet wird, so daß aus der Lampenkette eine Kette aus beleuchteten Luftballons entsteht, deren Lampen aus dem Stromnetz gespeist werden.

Die Erfindung wird anhand bevorzugter Ausführungsformen beschrieben, die aus der Zeichnung ersichtlich sind. In der Zeichnung zeigen:

Fig. 1 bis 6     erfindungsgemäße Zubehörvorrichtungen für aufblasbare Gasballons mit einer Lampe, die von einer elektrischen Batterie in einem Griffgehäuse gespeist wird, und

Fig. 7 und 8     zwei Ausführungsformen, welche für den Betrieb der Lampe aus dem elektrischen Stromnetz konzipiert sind.

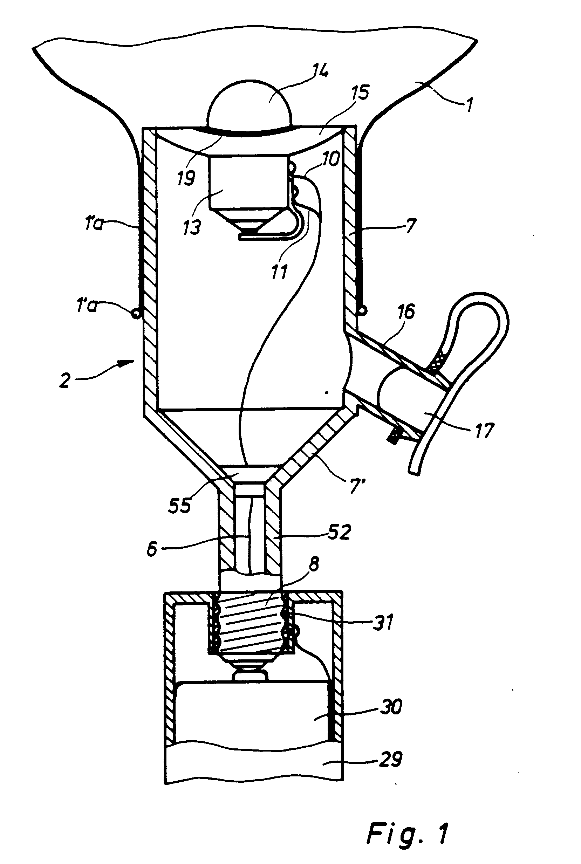

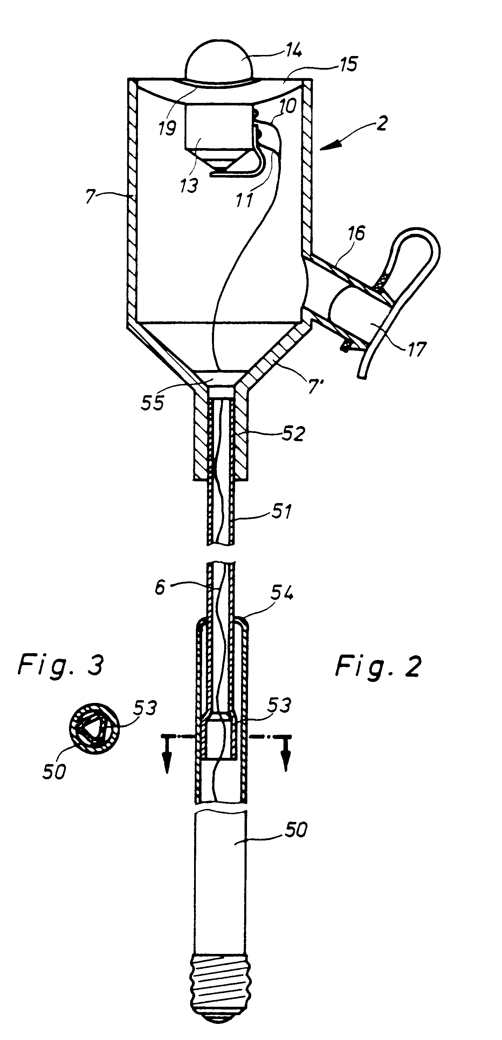

Die Verschlußköpfe 2 der Ausführungsformen aus den Fig. 1 und 2 sind weitestgehend identisch. Sie weisen jeweils ein aus einem Kunststoffmaterial gespritztes hohlzylindrisches, becherförmiges Gehäuse 7 auf, dessen Boden 7' sich konisch verjüngt und in einen nach unten vorstehenden Rohrstutzen 52 endet. In dem dem Rohrstutzen 52 abgewandten offenen Ende des Gehäuses 7 sind eine Lampenfassung 13 zum Einschrauben einer Taschenlampenbirne 14 und ein diese umgebender, gewölbter Lichtreflektor 15 angeordnet, welcher den lichten Querschnitt des offenen Endes des Gehäuses 7 im wesentlichen vollständig einnimmt und dessen konkave Reflektorfläche an seiner gehäuseäußeren Seite angeordnet ist. Zur Stromversorgung der Lampe sind an der Fassung 13 elektrische Leitungen 10, 11 angeschlossen, die zu einem Kabel 6 zusammengefaßt durch einen in das obere Ende des Rohrstutzens 52 hineinragenden Dichtungsstopfen 55 oder dgl. abgedichtet in den Rohrstutzen 52 einlaufen. Der Verschlußkopf wird mit dem offenen Ende seines Gehäuses 7 voraus in den Ballonhals 1a eines handelsüblichen Luftballons 1 eingeführt, so daß der Ballonhals 1a und der daran vorhandene Randwulst 1'a abdichtend an der Außenumfangsfläche des Gehäuses 7 anliegen und das offene Ende des Gehäuses 7 mit der Lampe 14 und dem Reflektor 15 am ballonseitigen Ende des Ballonhalses 1a angeordnet sind. Daraus ergibt sich eine wirksame Innenbeleuchtung des Luftballons 1, wenn die Lampe 14 eingeschaltet wird.

Der Reflektor 15, der gleichzeitig als Halterung der Lampenfassung 13 mit dieser fest verbunden sein kann, kann in das offene Ende des Gehäuses 7 eingeklebt, eingeklemmt oder vorzugsweise eingerastet sein. Er kann aus einem an der Reflektorfläche verspiegelten Metallblech oder Kunststoffmaterial oder aus einem hochweißen Spritzgußteil aus einem thermoplastischen Kunststoffmaterial, insbesondere Polyestermaterial, mit einem hohen Anteil an Weiß-Pigment bestehen. Bervorzugt besteht das Spritzgußteil aus einem thermoplastischen Polyestermaterial auf Basis von Polybutylenterephthalat. Dadurch wird aufgrund des relativ hohen Gehaltes an Weiß-Pigment eine sehr gute Reflexion bei hoher Lichtdichte auch bei geringen Wandstärken erreicht, wobei die Reflexionsfläche durch die Oberflächenfeinheit der zugeordneten Oberfläche der Spritzgleßform auf einen hohen Glanz gebracht werden kann.

Am geschlossenen Ende des Gehäuses 7 ist am Übergang des Gehäusemantels zum Gehäuseboden 7' ein Füllstutzen 16 angeformt, der mit einem Stopfen 17 verschlossen werden kann und zum Aufblasen des Luftballons nach dessen Aufziehen auf das Gehäuse 7 dient. Der Reflektor 15 weist wenigstens eine Luftdurchtrittsöffnung 19 z.B. in Form einer Randausnehmung auf, so daß durch den Füllstutzen 16, den Innenraum des Gehäuses 7 und die Luftdurchtrittsöffnung 19 ein den Reflektor passierender Gaszuführkanal zum Aufblasen des Luftballons 1 besteht. Zusätzlich oder alternativ zu dem Verschlußstopfen 17 kann an dem Füllstutzen 16 auch ein zu dessen freien Ende hin sperrendes Rückschlagventil vorgesehen sein. Der Füllstutzen 16 kann senkrecht zur Achse des Gehäuses 7 ausgerichtet sein, ist jedoch vorzugsweise, wie in der Zeichnung gezeigt, relativ zur Gehäuseachse schräg nach unten ausgerichtet. Dadurch wird das Aufblasen des mit seinem Ballonhals 1a auf das Gehäuse aufgezogenen Luftballons 1, dessen Abstand von dem Füllstutzen 16 nur gering ist, begünstigt.

Der Außendurchmesser des Mantels des Gehäuses 7 ist bei den Ausführungsformen aus den Fig. 1 und 2 etwa doppelt so groß wie der Innendurchmesser des Ballonhalses 1a vor dessen Aufziehen auf den Verschlußkopf 2. Das Aufziehen des Ballonhalses 1a auf den Verschlußkopf 2 kann so erfolgen, daß zunächst der Ballonhals 1a, beginnend am Randwulst 1'a, vollständig zu einem Ringwulst aufgerollt wird, der dann unter elastischer Aufweitung über das lampenseitige Ende des Verschlußkopfes 2 gespannt wird und danach auf der Außenfläche des Gehäuses 7 wieder entrollt wird. Dann liegt der Ballonhals 1a und dessen Randwulst 1'a in elastisch aufgeweitetem Zustand in der in der Zeichnung gezeigten Weise über die gesamte Länge des Ballonhalses 1a hin an der Außenfläche des Gehäuses 7 an, so daß er gasdicht gegen die Außenfläche des Verschlußkopfes 2 gezogen wird.

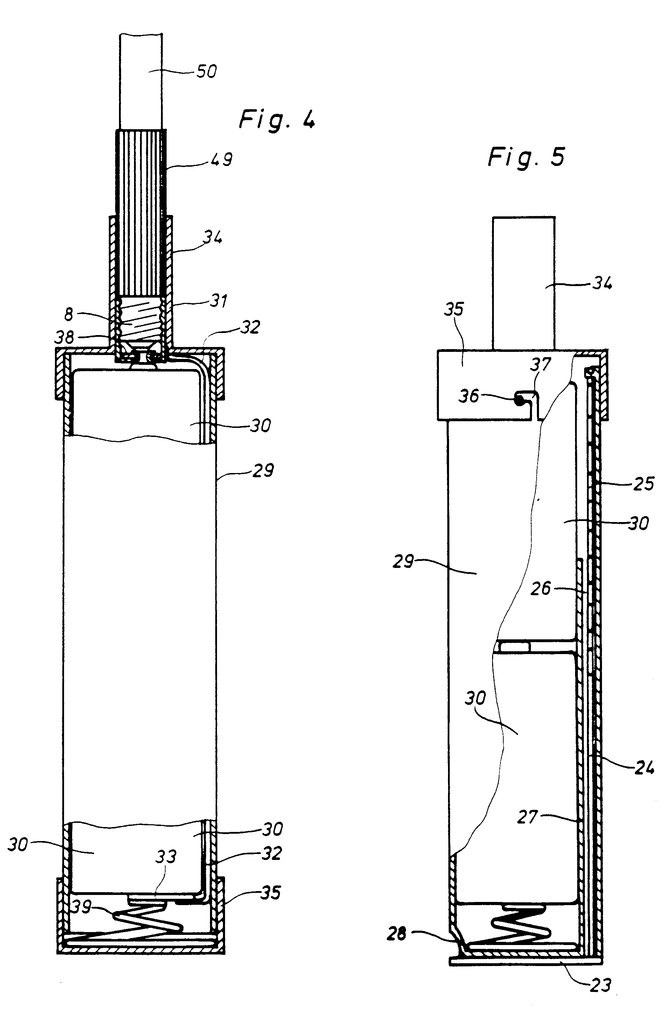

Die Zusatzvorrichtung für den Luftballon 1 enthält bei der Ausführungsform aus Fig. 1 auch ein Griffgehäuse 29, in welchem eine elektrische Batterie 30 als Stromquelle der Lampe 14 des Verschlußkopfes 2 untergebracht ist und in dessen oberen Ende eine herkömmliche Lampenschraubfassung 31 versenkt angeordnet ist. Bei der Ausführungsform aus Fig. 1 sind die Leitungen 10, 11 an eine elektromechanische Kupplung in Form eines herkömmlichen Lampenschraubsockels 8 angeschlossen, der bei der gezeigten Ausführungsform ein E10-Sockel ist und der auf dem unteren Ende des Rohrstutzens 52 des Verschlußkopfes 2 festgelegt ist und mit welchem der Verschlußkopf 2 in die Lampenschraubfassung 41 des Griffgehäuses 29 zum gleichzeitigen Herstellen der elektrischen Verbindung zwischen der Lampe 14 und der Batterie 30 und der mechanischen Verbindung zwischen dem Verschlußkopf 2 und dem Griffgehäuse 29 eingeschraubt werden kann. Am Griffgehäuse 29 kann - wie für Stabtaschenleuchten üblich - ein Schalter (nicht gezeigt) vorgesehen sein. Vorzugsweise jedoch ist ein solcher Schalter nicht vorhanden, sondern die Stromzufuhr von der Batterie 30 zur Lampe 14 wird - wie in Verbindung mit Fig. 4 noch erläutert - dadurch hergestellt bzw. unterbrochen, daß der Lampenschraubsockel 8 in die Lampenschraubfassung 31 bis zum Auftreffen seines Zentralpoles an denjenigen der Batterie 30 hineingeschraubt bzw. in der Lampenschraubfassung 31 bis zum Abheben seines Zentralpoles von demjenigen der Batterie 30 etwas herausgeschraubt wird, ohne dadurch die mechanische Schraubverbindung zwischen dem Verschlußkopf 2 und dem Griffgehäuse 29 vollständig zu lösen.

Bei der Ausführungsform aus Fig. 2 hingegen ist am Verschlußkopf 2 eine Tragstange 50, 51 befestigt, die am unteren Ende ebenfalls einen Lampenschraubsockel 8 aufweist, der in die Lampenschraubfassung 31 des Griffgehäuses 29 aus Fig. 1 eingeschraubt werden kann. Die Tragstange 50, 51 ist vorzugsweise elastisch verbiegbar, so daß der mit dem Griffgehäuse 29 verbundene Luftballon 1 mit dem Verschlußkopf 2 elastisch hin- und hergeschwungen werden kann. Die Tragstange 50, 51 ist teleskopisch ausgebildet und besteht aus einem inneren Teleskoprohr 51, welches in den Rohrstutzen 52 des Verschlußkopfes 2 eingeschoben und dort verklebt ist, und aus einem äußeren Teleskoprohr 50, dessen Außendurchmesser mit demjenigen des Rohrstutzens 52 übereinstimmt und an dem der Lampensockel 8 befestigt ist. Das aus dem Verschlußkopf 2 herausgeführte Kabel 6 verläuft durch die teleskopische Tragstange 50, 51 schraubenlinienförmig gewunden hindurch, so daß das Kabel mit den Teleskoprohren 50, 51 auseinandergezogen und zusammengeschoben werden kann. Es ist jedoch auch möglich, die elektrische Leitungsverbindung durch in den Teleskopteilen ausgebildete Schleifkontakte auszubilden oder für das Kabel 6 in dem äußeren Teleskoprohr 50 eine entsprechende Vorratslänge vorzusehen, damit es der teleskopischen Verlängerung der Tragstange 50, 51 zu folgen vermag. Beispielsweise kann hierzu das Kabel auf einer kleinen, federbelasteten Spule innerhalb der Tragstange aufgewickelt sein, so daß es beim Auseinanderziehen der Tragstange von der Spule abgewickelt wird. Es ist auch möglich, ein verhältnismäßig biegeweiches Kabel zu verwenden, das sich beim Zusammenschieben der Teleskopstange innerhalb der Teleskoprohre zusammenknüllt.

Bei der Ausführungsform aus Fig. 2 weist das freie Ende des äußeren Teleskoprohres 50 eine Einbördelung 54 auf, die gleitend verschiebbar an dem inneren Teleskoprohr 51 anliegt, welches seinerseits am freien Ende eine im Querschnitt dreieckige Aufquetschung 53 aufweist, die entsprechend Fig. 3 mit ihren Eckkanten an der Innenfläche des äußeren Teleskoprohres 30 gleitend anliegt. Durch eine derartige Gestaltung wird gleichzeitig eine gute Führung der Teleskoprohre ineinander ohne enge Anpassung der Rohrdurchmesser aneinander erreicht und die Einbördelung und die Aufquetschung wirken als Anschläge zusammen, von welchen ein vollständiges Auseinanderziehen der Teleskoprohre verhindert wird. Zu diesen Zwecken sind jedoch ersichtlich auch andere an sich bekannte Maßnahmen möglich. Die Tragstange 50, 51 kann auch aus einem einzigen, nicht-teleskopischen Tragrohr bestehen, welches vorzugsweise ebenfalls elastisch auslenkbar ist.

Der Verschlußkopf 2 aus Fig. 1 kann auch vom Griffgehäuse 29 getrennt verwendet werden, um zusammen mit anderen gleichartigen Verschlußköpfen 2 eine Kette aus beleuchteten Luftballons z.B. für Garten- und Campingparties oder dgl. zu erhalten. Hierzu werden die Verschlußköpfe 2 mit ihren Lampenschraubsockeln 3 in Lampenschraubfassungen eingeschraubt, die an einem elektrischen Kabel, wie beispielsweise für die elektrische Christbaumbeleuchtung bekannt, verteilt angeordnet sind. Wenn an den Enden der Kabel Steckverbindungen ausgebildet sind, lassen sich die Ketten aus beleuchteten Luftballons beliebig verlängern. Es ist auch möglich, sich verzweigende Lichterketten dadurch auszubilden, daß am Ende eines der Kabel ebenfalls ein Lampenschraubsockel 8 angeordnet wird, der dann in eine beliebige Lampenschraubfassung eines anderen Kabels eingeschraubt werden kann. Solche Ketten aus beleuchteten Luftballons lassen sich insbesondere an eine Stromquelle wie eine Autobatterie anschließen, wobei Lampen 14 verwendet werden, die auf eine an die Spannung der Stromquelle angepaßte elektrische Spannung ausgelegt sind.

Aus den Fig. 4 und 5 sind andere Ausführungsformen des Griffgehäuses 29 ersichtlich. Von ihrem oberen Gehäusedeckel ragt axial ein zentraler Rohrstutzen 34 ab, der zur Aufnahme des Rohrstutzens 52 des Verschlußkopfes 2 aus Fig. 1 bzw. des unteren Endes der Stange 50 aus Fig. 2 dient und in dessen unteres Ende entsprechend Fig. 4 die Lampenschraubfassung 31 eingeklebt oder eingeklemmt ist. Gemäß Fig. 4 ist am unteren Ende der Lampenschraubfassung 31 eine Kontaktplatte 38 eingebördelt, die einen Zentralkontakt zur Übergabe des Stromes von dem Zentralpol der Batterie 30 zu dem Zentralpol des in die Lampenschraubfassung 31 eingeschraubten Lampensockels 8 aufweist. Diese an der Lampenschraubfassung 31 festgelegte Kontaktplatte 38 wirkt außerdem mit dem Lampenschraubsockel 8 als Anschlag zusammen und bildet dadurch mit dem Lampenschraubsockel einen elektrischen Schalter zum Ein- und Ausschalten der Lampe 14 im Verschlußkopf 2: Durch Hineinschrauben des Lampenschraubsockels 8 in die Lampenschraubfassung 31 bis zum Anschlagen des Zentralpols des Sockels 8 am Zentralkontakt der Kontaktplatte 38 wird die Stromverbindung der Lampe 14 im Verschlußkopf 2 hergestellt und wenn der Lampenschraubsockel 8 in der Lampenschraubfassung 31 etwas zurückgeschraubt wird, bis der Zentralpol des Sockels 8 vom Zentralkontakt der Kontaktplatte 38 abhebt, wird die Stromverbindung unterbrochen, ohne daß die mechanische Verbindung des Verschlußkopfes 2 mit dem Griffgehäuse 29 wesentlich gelöst wird. Falls der Lampenschraubsockel 8 mit seinem Zentralpol unmittelbar in Kontakt mit dem Zentralpol der Batterie 30 stehen würde, so würde der Lampenschraubsockel zum Unterbrechen der Stromverbindung um ein größeres Maß als beim Vorhandensein der Kontaktplatte 38 in der Lampenschraubfassung 31 herausgeschraubt werden müssen, wodurch die mechanische Verbindung zwischen dem Verschlußkopf und dem Griffgehäuse 29 verschlechtert würde. Um einen guten Kontaktdruck und daher eine gute Stromübergabe zu erreichen, werden nämlich die Batterien 30 in dem Griffgehäuse 29 in üblicher Weise von einer Schraubenfeder 39 nach oben gedrückt und würden beim Fehlen der Kontaktplatte 38 der Bewegung des Lampenschraubsockels 8 bei dessen Herauschrauben aus der Schraubfassung 31 um ein, wenn auch begrenztes Maß folgen. Dies wird durch das Zwischenschalten der Kontaktplatte 38 verhindert, wodurch der Schraubwinkel beim Verschrauben des Schraubsockels 8 in der Schraubfassung 31 zum Unterbrechen der Stromverbindung verhältnismäßig klein sein kann und daher keine Beeinträchtigung der mechanischen Verankerung des Verschlußkopfes 2 am Griffgehäuse 29 erhalten wird.

Wie weiter aus Fig. 4 ersichtlich, ist bei der darin gezeigten Ausführungsform der Lampenschraubsockel 8 zur Tragstange 50 hin von einer diese umgebenden geriffelten Griffhülse 49 verlängert und an dieser festgelegt. Bei vollständig in die Schraubfassung 31 eingeschraubtem Schraubsockel 8 ragt die Griffhülse 49 aus dem Rohrstutzen 34 nach oben hinaus. Ihr Außendurchmesser entspricht im wesentlichen dem Innendurchmesser des Rohrstutzens, so daß die Tragstange 50 in dem Rohrstutzen 34 des Griffgehäuses 29 gegen seitliches Hin- und Herwackeln abgestützt geführt ist. Außerdem wird von der Griffhülse 49 das Hin- und Herdrehen der Tragstange 50 gegenüber dem Griffgehäuse 29 zum Ein- bzw. Ausschalten der Lampe erleichtert.

Der elektrische Masseanschluß der Lampenschraubfassung 31 an den Massepol am unteren Ende der Batterien 30 wird nach Fig. 4 duch ein mehradriges Flachkabel 32 hergestellt, dessen am oberen Ende des Flachkabels 32 freiliegenden Leitungsadern zwischen der Lampenschraubfassung 8 und der Innenseite des Rohrstutzens 34 eingeklemmt sind. Durch Verwendung eines mehradrigen Flachkabels 32 mit z.B. zwei bis vier Leitungsadern ist ein einwandfreier elektrischer Kontakt mit der Lampenschraubfassung 31 sichergestellt. Am unteren Ende des Flachkabels 32 ist an dessen dort freiliegenden Leitungsadern eine Kontaktscheibe 33 angelötet, die von der Schraubenfeder 39 fest gegen den Boden des Batteriebechers der benachbarten Batterie 30 angedrückt wird. Zum Auswechseln der Batterien 30 kann der untere, kappenförmige Deckel 35 des Griffgehäuses 29 mitsamt der Schraubenfeder 39 von diesem gelöst werden, wonach man die Batterien 30 aus dem Gehäuse herausrutschen läßt. Hierbei wird die Kontaktscheibe 33 von den Batterien 30 seitlich nach unten weggeklappt, weil das Flachkabel 32 sehr biegeweich ist. Die Kontaktscheibe 33 ragt dann nach unten aus dem Griffgehäuse 29 heraus, so daß die neuen Batterien 30 mühelos in das Gehäuse eingeführt werden können, wonach die Kontaktscheibe 33 wieder gegen den Boden des Batteriebechers der unteren Batterie 30 geklappt wird und dort durch Aufsetzen des Deckels 35 mit der Schraubfeder 39 wieder zwischen dieser und der Batterie 30 festgeklemmt wird. Die Verbindung des Deckels 35 mit dem Gehäuse 29 kann eine Schraubverbindung sein. Vorzugsweise wird jedoch eine Bajonettverbindung vorgesehen, wie sie in Fig. 5 für den oberen kappenförmigen Verschlußdeckel 35 des Griffgehäuses 29 prinzipiell gezeigt ist. Bevorzugt ist jedoch entgegen der Darstellung in Fig. 5, die nur aus zeichnerischen Gründen gewählt wurde, der winkelförmige Bajonettschlitz 37 im Endrand des Mantels des Gehäuses 29 ausgebildet und der in den Bajonettschlitz 37 eingreifende Stift 36 an der Innenseite des Kappenmantels des Deckels 35 angeformt, so daß die Bajonettverbindung optisch verdeckt ist.

Wenn der beleuchtete Luftballon zur Dekoration mit dem Griffgehäuse 29 auf eine Platte, z.B. einen Tisch, gestellt werden soll, kann ein Ständer vorgesehen werden, in welchen das Griffgehäuse 29 kippfest hineingesteckt werden kann. Zur kippfesten Festlegung des Griffgehäuses 29 an einer Platte ist jedoch vorzugsweise an dem unteren Ende des Griffgehäuses 29 eine Klemmvorrichtung zum Anklemmen des Griffgehäuses 29 an eine Platte ausgebildet. Eine solche Klemmvorrichtung ist vom prinzipiellen Aufbau her aus Fig. 5 ersichtlich. Sie besteht aus einer vorzugsweise ringförmigen Klemmplatte 23, die normalerweise an der Unterseite des Griffgehäuses 29 anliegt und eine senkrecht nach oben von ihr abstehende Führungslasche 24 aufweist, die in einem innerhalb des Griffgehäuses 29 zwischen einer Zwischenwand 27 und dem Gehäusemantel ausgebildeten Führungskanal 26 verschiebbar geführt ist. An dem oberen Ende der Führungslasche 24 greift eine Feder 25 an, deren anderes Ende gehäusefest abgestützt ist. Die Klemmplatte 23 kann daher entgegen der Kraft der Feder 25 aus dem Griffgehäuse 29 herausgezogen und unter den Rand einer Tischplatte gehakt werden, auf welcher dann das Griffgehäuse 29 unter der Klemmkraft der Feder 25 festgeklemmt wird. Wie aus Fig. 5 ersichtlich, ist vorzugsweise am unteren Ende des Griffgehäuses 29 eine Griffmulde 28 ausgebildet, in welche die Klemmplatte 23 hineinragt, so daß sie leichter ergriffen und aus dem Griffgehäuse 29 herausgezogen werden kann.

Zur Verbesserung der Kippfestigkeit des auf einer Platte aufgestellten Griffgehäuses 29 kann auch eine andere Haltevorrichtung (nicht gezeigt) am unteren Griffgehäuseende vorgesehen sein, welche in dessen Innenraum einschiebbare und aus diesem unter Vergrößerung der Standfläche des Griffgehäuses 29 auf der Platte bedarfsweise seitlich ausfahrbare Stützelemente aufweist. Beispielsweise können am Umfang des unteren Griffgehäuseendes drei oder mehr Schlitze oder sonstige Öffnungen gleichmäßig verteilt ausgebildet sein, in denen jeweils ein streifenförmiges, scheibenförmiges oder stabförmiges Stützelement aus hinreichend biegefestem Material für sein radiales Ausfahren aus dem Gehäuse reibschlüssig geführt ist. Die freien Enden der Stützelemente liegen spätestens nach ihrem Ausfahren aus dem Gehäuse 29 in derselben Ebene wie dessen Unterseite. Hierzu kann an den freien Enden der Stützelemente ein nach unten ragender Ansatz ausgebildet sein, dessen Unterseite in der Ebene der Gehäuseunterseite liegt, oder die Stützelemente können aus ihren Führungsöffnungen leicht schräg nach unten ausfahrbar sein, damit ihre Enden nach dem Ausfahren in der Ebene der Gehäuseunterseite liegen und sie nach dem Einfahren in das Gehäuse über dessen Boden angeordnet sind. Es ist z.B. auch möglich, als derartige Haltevorrichtung eine elastisch vorgespannte Federspirale zu verwenden, welche in einer Umfangsöffnung des unteren Gehäuseendes reibschlüssig geführt ist, innerhalb des Gehäuses 29 mit ihren Spiralwindungen eng aneinander liegt und sich nach dem Herausziehen aus dem Gehäuse aufgrund der Vorspannung zu einer Stützspirale rings des unteren Gehäuseendes auseinanderspreizt. Um im unteren Gehäuseende Raum für das Einfahren derartiger Haltevorrichtungen zu schaffen, kann die Andrückfeder 39 der Batterien 30 auf Innenschultern im unteren Gehäuseende im Abstand über dessen Boden abgestützt sein, so daß die in das Gehäuse eingefahrenen Stützelemente in dem freien Raum unter dem unteren Federende angeordnet sind.

Bei der Ausführungsform aus Fig. 5 ist die Feder 25 als streifenförmige Flachfeder mit zickzackförmigem oder mäanderförmigem Verlauf ausgebildet, die am oberen Ende der Führungslasche 24 festgelegt ist und mit ihrem anderen Ende in einen Befestigungsvorsprung am oberen Ende des Mantels des Gehäuses 29 eingehakt ist, so daß sie als Zugfeder wirkt. Es ist jedoch auch möglich, die Feder 25 als z.B. flachgedrückte Schraubenfeder auszubilden, von welcher die Führungslasche 24 umgeben ist und welche zwischen dem oberen Ende der Führungslasche 24 und dem Boden des Griffgehäuses 29 als Druckfeder abgestützt ist.

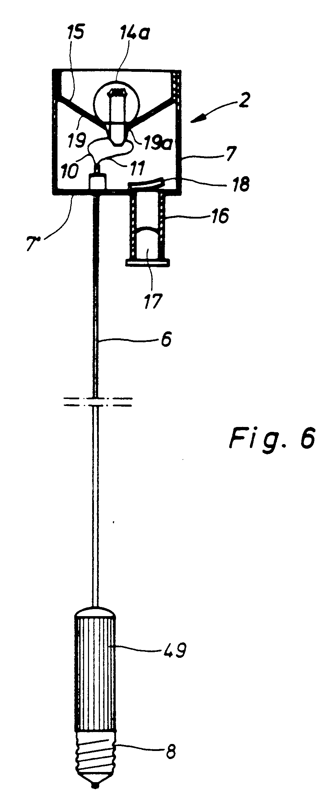

Die Ausführungsform einer erfindungsgemäßen Zusatzvorrichtung ist für mit einem Leichtgas gefüllte, frei schwebende Luftballons mit Innenbeleuchtung bestimmt. Auch hier weist der Verschlußkopf 2 ein aus Kunststoffmaterial bestehendes becherförmiges Gehäuse 7 mit geschlossenem Boden 7' auf, der jedoch abweichend von den Fig. 1 und 2 senkrecht zur Gehäuseachse verläuft. In das obere offene Ende des Gehäuses 7 ist ein becherförmiger Reflektor 15 eingeklebt, der eine zentrale Öffnung 19a aufweist, in welcher ein sockelloser Glühlampenkolben 14a als Lampe gehalten ist. An die Glühfaden-Anschlußdrähte sind die beiden Leitungen 10, 11 eines Kabels 6 angelötet, welches gasdicht durch den Boden 7' des Verschlußkopfes 2 herausgeführt ist und gleichzeitig als Halteseil des mit Leichtgas gefüllten, schwebenden Luftballons (in Fig. 6 nicht gezeigt) dient. Am unteren Ende des Kabels 6 sind die beiden Leitungen 10, 11 ebenfalls an die beiden Pole eines Glühlampenschraubsockels 8 elektrisch angeschlossen und in diesem mechanisch festgelegt. Auch nach Fig. 6 ist der Lampenschraubsockel 8 nach oben durch eine Griffhülse 49 verlängert, von welcher das Kabel 6 umgeben ist. Mit Hilfe der Griffhülse 49 kann daher der Lampensockel 8, wie im Zusammenhang mit Fig. 4 erläutert, in die Lampenfassung in einem Batterien enthaltenden Griffgehäuse 29 eingeschraubt werden. Auch hier wird mittels des Lampenschraubsockels 8 gleichzeitig die mechanische Verankerung des schwebenden Luftballons am Griffgehäuse 29 und die elektrische Verbindung der Batterien im Griffgehäuse 29 mit dem Lampenkolben 14a sichergestellt, wobei das Ein- und Ausschalten des Lampenkolbens 14a durch geringfügiges Drehen an der Griffhülse 49 erfolgt, wie oben erläutert.

Wie in Fig. 6 gezeigt, bestehen das Gehäuse 7 des Verschlußkopfes 2 und der in diesem versenkt angeordnete becherförmige Reflektor 15 aus einem möglichst dünnwandigen Material und auch das Kabel 6 ist möglichst dünn und leicht, damit der mit dem Leichtgas aufgeblasene Ballon in der Luft schweben kann und nicht unter dem Gewicht des Verschlußkopfes und des Kabels zu Boden sinkt. Aus dem gleichen Grund ist auch die Lampe zur Innenbeleuchtung des Luftballons als sockelloser Lampenkolben 14a ausgebildet, so daß nicht nur das Gewicht eines Lampensockels sondern auch das Gewicht einer Lampenfassung im Verschlußkopf 2 entfällt. Der Lampenkolben 14a kann in der Zentralöffnung des Reflektors 15 z.B. eingekittet, eingeklebt oder eingeklemmt gehalten sein. Ebenfalls aus Gewichtsgründen ist das Gehäuse 7 des Verschlußkopfes 2 aus Fig. 6 möglichst kurz. Daher ist der Füllstutzen 16 nicht wie bei den Ausführungsformen aus den Fig. 1 und 2 am unteren Ende des Bechermantels des Gehäuses 7, sondern am Boden 7' des Gehäuses angeordnet. Daher braucht die Länge des Gehäuses 7 nicht größer zu sein als die Länge des über das Gehäuse 7 gespannten Ballonhalses im elastisch aufgeweiteten Zustand. Ferner wiest der Füllstutzen 16 nach Fig. 6 ein Rückschlagventil auf, das in der gezeigten Ausführungsform aus einer Ventilklappe 18 besteht, welche einseitig auf dem Gehäuseboden 7' befestigt ist und von welcher unter dem Druck des Leichtgases im Ballon das obere Ende des Füllstutzens 16 verschlossen wird. Zusätzlich kann entsprechend Fig. 6 ein Verschlußstopfen 17 vorhanden sein. Die Gasdurchtrittsöffnungen 19 sind nach Fig. 6 als Löcher in der Reflektorfläche ausgebildet.

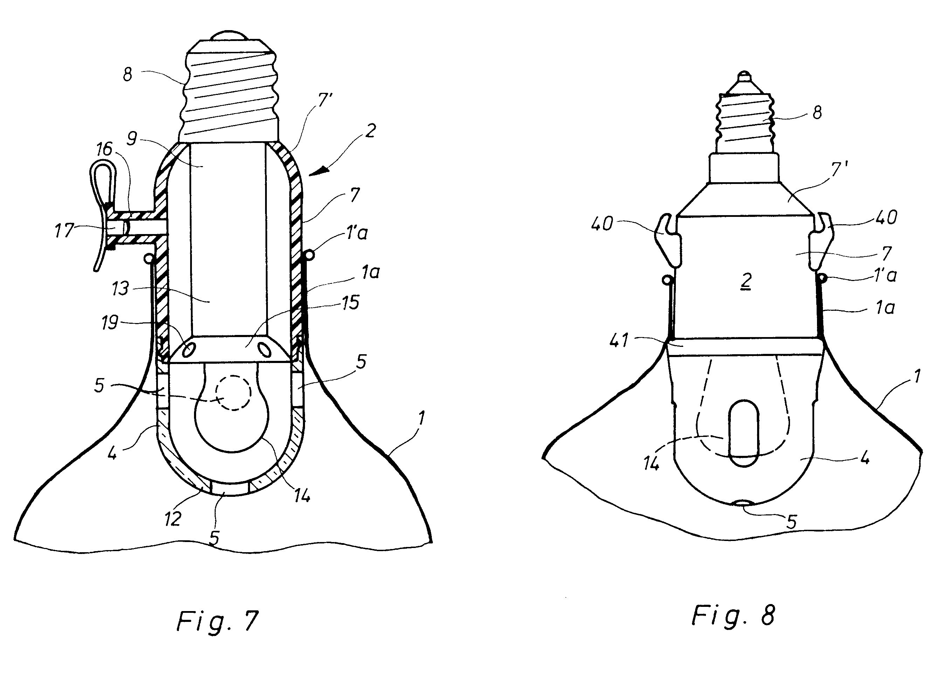

Aus den Fig. 7 und 8 sind zwei Ausführungsformen der erfindungsgemäßen Zusatzvorrichtung ersichtlich, welche hauptsächlich zur Innen- und Außendekoration mit innenbeleuchteten Luftballons bestimmt sind und im wesentlichen nur aus dem Verschlußkopf 2 mit einem unmittelbar daran angeordneten Lampenschraubsockel 8 bestehen. Die Größe des Lampenschraubsockels 8 ist an diejenige z.B. für Innen- oder Außenleuchten gebräuchliche Lampenschraubfassungen angepaßt und kann frei gewählt werden. So ist der Lampenschraubsockel nach Fig. 7 ein E27-Sockel und nach Fig. 8 ein E14-Sockel. Dadurch kann der Verschlußkopf mit dem darauf aufgezogenen Luftballon 1 in eine externe Lampenschraubfassung eingeschraubt werden, die an eine externe Stromquelle angeschlossen ist. Vorzugsweise sind die Lampen 14 in den Verschlußköpfen auf den Betrieb aus dem Stromnetz ausgelegt.

Auch die Verschlußköpfe 2 aus den Fig. 7 und 8 weisen ein aus Kunststoffmaterial bestehendes becherförmiges Gehäuse 7 mit einem Gehäuseboden 7' auf, an dem der Lampenschraubsockel 8 gasdicht festgelegt ist. Nach Fig. 7 ragt innerhalb des Gehäuses 7 aus dem Lampensockel 8 ein Rohr 9 nach unten, in dessen unterem Ende nahe dem dem Lampensockel 8 abgewendeten offenen Ende des Gehäuses 7 eine Lampenfassung 13 für die über das offene Ende des Gehäuses 7 nach oben herausragende elektrische Lampe 14 zur Innenbeleuchtung des mit seinem Ballonhals 1a auf das Gehäuse 7 gespannten Luftballons 1 angeordnet ist. Auch bei der Ausführungsform aus Fig. 7 ist im offenen Ende des Gehäuses 7 ein Reflektor 15 angeordnet.

Insbesondere bei einer auf Netzbetrieb ausgelegten Lampe 14 wird diese, selbst wenn sie eine niedrige Wattzahl von z.B. 10 Watt aufweist, im Betrieb verhältnismäßig warm, so daß die Luftballonhülle, wenn sie aufgrund eines Luftzuges oder aufgrund von Wind mit der aus dem Gehäuse herausragenden Lampe in Berührung kommt, platzen kann. Bevorzugt ist daher die in die Fassung 13 eingesetzte Lampe 14 von einer Kappe 4 aus transparentem Kunststoffmaterial umgeben, die auf das offene Ende des Gehäuses 7 aufgesetzt, insbesondere aufgeschraubt werden kann. Die transparente Kappe 4, deren Außenumfangsfläche kreiszylindrisch ist, deren Durchmesser dem Außendurchmesser des Gehäuses 7 entspricht, weist einen nach außen konvex gewölbten, vorzugsweise kugelschalenförmigen Kappenboden 12 auf und ist nahe des Kappenrandes mit vier Luftlöchern 5 versehen, die am Kappenumfang gleichmäßig verteilt angeordnet sind. Im Kappenscheitel ist ein zusätzliches Loch 5 ausgebildet. Es ist ersichtlich, daß die transparente Kappe 4 verhindert, daß die Hülle des Luftballons 1 mit der im Betrieb warmen Lampe 14 in Berührung kommen kann. Durch die Luftlöcher 5 wird das Kappeninnere zum Balloninneren hin entlüftet, so daß in der Kappe sich kein Wärmestau bilden kann.

Nahe unter dem Ringwulst 1'a des auf das Gehäuse 7 gespannten Ballonhalses 1a des Luftballons 1 ist an dem Gehäuse 7 ebenfalls ein Füllstutzen 16 ausgebildet, der mit einem Stopfen 17 verschlossen werden kann. Durch den Füllstutzen 16, das Gehäuse 7, Durchtrittsöffnungen 19 im Reflektor 15 und die Luftlöcher 5 in der transparenten Kappe 4 hindurch kann daher der Luftballon 1 wie bei den anderen Ausführungsformen aufgeblasen werden.

Bei der Ausführungsform aus Fig. 7 hat das Gehäuse 7 mit der aufgesetzten transparenten Kappe 4 insgesamt die Form des Kolbens einer Röhrenlampe.

Die Ausführungsform aus Fig. 8 entspricht vom grundsätzlichen Aufbau her derjenigen aus Fig. 7, was durch gleiche Bezugszahlen für gleiche Teile angegeben ist. Der Gehäuseboden 7' der Ausführungsform aus Fig. 8 ist jedoch ähnlich wie bei den Ausführungsformen aus den Fig. 1 und 2 kegelstumpfförmig. Außerdem ist nach Fig. 8 am offenen Ende des Gehäuses 7, am Übergang zu der Kappe 4 an dem Gehäuse 7 ein nach außen vorstehender kovex gekrümmter Ringbund 41 ausgebildet, dessen Umfangsfläche glatt in die Außenfläche der Kappe 4 einläuft, so daß der Luftballon 1 mit dem Ringwulst 1'a und dem Ballonhals 1a in der für die anderen Ausführungsformen beschriebenen Weise auf den Verschlußkopf 2 bis hinter den Ringbund 41 aufgezogen werden kann und dort der Ballonhals 1a und der Ringwulst 1'a abdichtend anliegen. Das zusätzliche kleine Loch 5 im Scheitel der Kappe 4 hat außerdem den Zweck, daß bei hängendem Verschlußkopf 2 gegebenenfalls sich in der Kappe 4 bildendes Kondenswasser aus der Kappe abfließen kann.

Ferner sind bei der aus Fig. 8 ersichtlichen Ausführungsform an dem dem Lampenschraubsockel 8 zuwendeten Gehäuseende zwei einander diametral gegenüberliegende Befestigungshaken 40 angeformt, die zu der Lampe 14 abgewendeten Richtung des Verschlußkopfes 2 hin offen sind. Dadurch kann anstelle des Luftballons 1 auf dem Verschlußkopf 2 ein üblicher Lampion mit seinen Lampionbügeln durch deren Einhängen in die Befestigungshaken 40 befestigt werden, so daß der Verschlußkopf 2 auch als Lichtquelle für aufgehängte Lampions geeignet ist.

Bei den Ausführungsformen aus den Fig. 7 und 8 kann der Reflektor 15 gegebenenfalls entfallen, wenn die Lampe 14 zur Ausleuchtung des Innenraums des aufgeblasenen Luftballons 1 hell genug ist, beispielsweise als übliche Halogenlampe ausgebildet ist.

Die erfindungsgemäße Zusatzvorrichtung kann auch Zwischenadapter enthalten, die an dem einen Ende einen Lampenschraubsockel und an dem anderen Ende eine an den Lampenschraubsockel elektrisch angeschlossene Lampenschraubfassung aufweisen, in welche ein erfindungsgemäßer Verschlußkopf 2 mit seinem eigenen Lampenschraubsockel einschraubbar ist. Hierdurch kann man z.B. zur Innendekoration eines Raumes, in dessen Decke übliche Lampenschraubfassungen versenkt angeordnet sind, in diese einen Zwischenadapter einschrauben, in den dann der Verschlußkopf 2 eingeschraubt wird. Wenn außerdem der Lampenschraubsockel 8 eines erfindungsgemäßen Verschlußkopfes 2 in seiner Größe nicht zu einer externen Lampenschraubfassung paßt, kann man einen derartigen Zwischenadapter verwenden, dessen Lampenschraubsockel und Lampenschraubfassung in ihrer Größe ähnlich wie bei dem Verschlußkopf 2 aus Fig. 7 entsprechend unterschiedlich sind. Derartige Zwischenadapter können prinzipiell wie erfindungsgemäße Verschlußköpfe 2 mit Lampenschraubsockel 8 ausgebildet sein. Sie brauchen aber nicht notwendig einen Füllstutzen 16 oder einen Reflektor 15 aufzuweisen, wenngleich z.B. die Verschlußköpfe 2 aus den Fig. 1, 7 und 8 auch selbst als Zwischenadapter geeignet sind.

Ferner kann man das zu Fig. 4 erläuterte Konstruktionsprinzip zur Ausbildung eines elektrischen Drehschalters mit Hilfe des Lampenschraubsockels 8 und der Lampenschraubfassung 31 auch unabhängig von innenbeleuchteten Luftballons für "normale" Taschenleuchten anwenden. Wenn man dort nämlich den die Taschenleuchtenlampe und den Leuchtenreflektor enthaltenden Gehäuseteil der Taschenleuchte von deren Batteriegehäuseteil trennt und zwischen den beiden getrennten Gehäuseteilen eine Lampenschraubfassung entsprechend Fig. 4 als elektromechanische Kupplung mit dem Lampenschraubsockel der Glühlampe unmittelbar oder mittelbar mit einem an die Glühlampe angeschlossenen zusätzlichen Lampensockel vorsieht, kann der für Stabtaschenleuchten sonst übliche Schiebeschalter, der verhältnismäßig aufwendig ist, entfallen. Zusätzlich kann die zu Fig. 4 erläuterte elektrische Verbindung zwischen der Lampenschraubfassung 31 und dem Becher der Batterie 30 über das mehradrige Flachkabel 32 und die Kontaktscheibe 33 entsprechend auch für "normale" Taschenleuchten angewendet werden.

Die erfindungsgemäße Zusatzvorrichtung für Gasballons besteht möglichst weitgehend aus einem Kunststoffmaterial, das vorzugsweise im Spritzgießverfahren verarbeitet werden kann. Es ist jedoch auch möglich, beispielsweise den Verschlußkopf 2 aus Fig. 1 als Integralschaumstoffteil auszubilden, welches im Inneren eine Schaumstoffstruktur hat, die außen von einer dichten homogenen Haut aus dem Schaumstoffmaterial überzogen ist. Hierbei wird somit das becherförmige Gehäuse 7 und gegebenenfalls auch der Reflektor 15 von der gasdichten Haut des Integralschaumstoffteils gebildet. Es ist dann möglich, die Lampenfassung und den Lampensockel und deren Verbindungsleitung sowie ein Röhrchen in die Schäumform zu plazieren, welches mit dem einen Ende an der Reflektorfläche mündet oder darüber hinaussteht und mit seinem anderen Ende den Füllstutzen 16 bildet, wonach die Schäumform ausgeschäumt wird und dadurch der Verschlußkopf 2 in einem einzigen Arbeitsgang hergestellt wird.

**Patentansprüche**

1. Zusatzvorrichtung eines aufblasbaren Gasballons (1), der einen elastisch aufweitbaren Ballonhals (1a) zum Aufblasen des Ballons (1) aufweist, mit einem Verschlußkopf (2) für den Ballonhals (1a) und einer elektrischen Lampe (14) zur Innenbeleuchtung des Ballons (1), wobei am Verschlußkopf (2) ein nach außen verschließbarer Gaszuführkanal (16) zum Aufblasen des Gasballons durch den Verschlußkopf (2) hindurch ausgebildet ist und die Lampe (14) über elektrische Leitungsverbindungen (6, 10, 11) mit einer äußeren elektromechanischen Kupplung (8) zum elektrischen Anschließen der Lampe (14) an eine elektrische Stromquelle (30) verbunden ist, dadurch gekennzeichnet, daß der Verschlußkopf (2) als becherförmiges Gehäuse (7) ausgebildet ist, welches ein offenes Ende und ein von einem Boden (7') verschlossenes Ende aufweist und mit seinem offenen Ende unter elastischer Aufweitung des Ballonhalses (1a) abdichtend in den Ballonhals (1a) einführbar ist, daß im offenen Ende des Gehäuses (7) ein Lichtreflektor (15) angeordnet ist, von welchem die elektrische Lampe (14) umgeben ist, und daß der Gaszuführkanal (16) am geschlossenen Ende des Gehäuses (7) nach außen mündet und eine den Reflektor (15) passierende Gasdurchtrittsöffnung (19) ausgebildet ist.

2. Zusatzvorrichtung eines aufblasbaren Gasballons (1) nach Anspruch 1, dadurch gekennzeichnet, daß die elektromechanische Kupplung (8) als Lampenschraubsockel (8) ausgebildet ist.

3. Zusatzvorrichtung eines aufblasbaren Gasballons (1) nach Anspruch 1, dadurch gekennzeichnet, daß die elektromechanische Kupplung (8) am Boden (7') des Gehäuses (7) angeordnet ist oder über ein am Boden (7') des Gehäuses (7) festgelegtes Rohr (50, 51, 52) oder elektrisches Kabel (6) mit dem Gehäuse (7) mechanisch verbunden ist.

4. Zusatzvorrichtung eines aufblasbaren Gasballons (1) nach den Ansprüchen 2 und 3, dadurch gekennzeichnet, daß der Lampenschraubsockel (8) von einer das Rohr (50, 52) oder Kabel (6) umgebenden Griffhülse (49) verlängert ist.

5. Zusatzvorrichtung eines aufblasbaren Gasballons (1) nach Anspruch 3, dadurch gekennzeichnet, daß das Rohr als flexibles Teleskoprohr (50, 51) ausgebildet ist.

6. Zusatzvorrichtung eines aufblasbaren Gasballons (1) nach Anspruch 2, dadurch gekennzeichnet, daß der Lampenschraubsockel (8) in eine Lampenschraubfassung (31) in einem die elektrische Stromquelle in Form wenigstens einer elektrischen Batterie (30) aufnehmenden Griffgehäuse (29) einschraubbar ist.

7. Zusatzvorrichtung eines aufblasbaren Gasballons (1) nach Anspruch 6, dadurch gekennzeichnet, daß an dem der Lampenschraubfassung (31) des Griffgehäuses (29) abgewandten Gehäuseende eine aus diesem ausfahrbare Haltevorrichtung (23) zum kippfesten Abstützen des Griffgehäuses (29) an einer Platte ausgebildet ist.

8. Zusatzvorrichtung eines aufblasbaren Gasballons (1) nach Anspruch 1, dadurch gekennzeichnet, daß der Reflektor (15) aus hochweißglänzendem Kunststoffmaterial hergestellt ist.

9. Zusatzvorrichtung eines aufblasbaren Gasballons (1) nach Anspruch 1, dadurch gekennzeichnet, daß die elektrische Lampe aus einem sockellosen Lampenkolben (14a) mit Anschlußdrähten besteht, an welche die elektrischen Leitungsverbindungen (10, 11) angeschlossen sind.

10. Zusatzvorrichtung eines aufblasbaren Gasballons (1) nach Anspruch 7, dadurch gekennzeichnet, daß die Lampenschraubfassung (31) im Griffgehäuse (29) an ihrem Ende eine feststehende Kontaktplatte (38) aufweist, die mit dem Lampenschraubsockel (8) sowohl zur Stromübergabe zwischen Batterie (30) und Lampenschraubsockel (8) als auch als Anschlag zusammenwirkt.

11. Zusatzvorrichtung eines aufblasbaren Gasballons (1) nach Anspruch 1, dadurch gekennzeichnet, daß auf das offene Ende des Gehäuses (7) eine dieses verlängernde, die Lampe (15) umgebende, gasdurchlässige transparente Kappe (4) aufgesetzt ist.

12. Zusatzvorrichtung eines aufblasbaren Gasballons (1) nach Anspruch 3, dadurch gekennzeichnet, daß der Gehäuseboden (7') sich konisch verjüngt und in einen nach außen vorstehenden Rohrstutzen (52) endet, durch den die Leitungsverbindungen (6, 10, 11) abgedichtet hindurchverlaufen und an dem die elektromechanische Kupplung (8) bzw. das Rohr (50, 51, 52) befestigt ist.

13. Zusatzvorrichtung eines aufblasbaren Gasballons (1) nach Anspruch 1, dadurch gekennzeichnet, daß der als Halterung einer Lampenfassung (13) für die Lampe (14) ausgebildete Reflektor (15) in dem offenen Gehäuseende verrastet ist.

## Claims

1. Supplementary device of an inflatable gas balloon (1) which is provided with an elastically expandable balloon neck (1a) for inflating said balloon (1), having a breech block (2) for the balloon neck (1a) and an electric lamp (14) for the interior illumination of said balloon (1), at the breech block (2) being provided a gas feeding channel (16) pluggable towards the outside for inflating the gas balloon through said breech block (2), and the lamp (14) being connected via electric lead connections (6, 10, 11) with an outer electromechanical coupling (8) for electrically connecting said lamp (14) with an electric power source (30), characterized in that the breech block (2) is made in the form of a cup-shaped casing (7) which is provided with a open end and an end closed by a bottom (7'), and which is sealingly introducible with its open end into the balloon neck (1a) while elastically expanding said balloon neck (1a), that a light reflector is disposed in the open end of the casing (7) which surrounds the electrical lamp (14), and that the gas feeding channel (16) empties toward the outside at the closed end of the casing (7) and a gas passage opening (19) is disposed which passes through said reflector (15).

2. Supplementary device of an inflatable gas balloon (1) according to Claim 1, characterized in that the said electromechanical coupling (8) is made in the form of a lamp screw base (8).

3. Supplementary device of an inflatable gas balloon (1) according to Claim 1, characterized in that the said electromechanical coupling (8) is disposed at the bottom (7') of the casing (7) or is mechanically connected with the casing (7) via a tube (50, 51, 52) or an electric cable (6) fixed at the bottom of the casing (7).

4. Supplementary device of an inflatable gas balloon (1) according to Claims 2 and 3, characterized in that said lamp screw base (8) is extended by means of a grip sleeve (49) surrounding the tube (50, 52) or cable (6).

5. Supplementary device of an inflatable gas balloon (1) according to Claim 3, characterized in that the tube is made in the form of a flexible telescopic tube (50, 51).

6. Supplementary device of an inflatable gas balloon (1) according to Claim 2, characterized in that the lamp screw base (8) is screwable into a lamp screw socket (31) in a grip casing (29) accommodating the electric power source in form of at least one electric battery (30).

7. Supplementary device of an inflatable gas balloon (1) according to Claim 6, characterized in that a holding device (23) extendible from the casing end averted from the screwed socket (31) of the grip casing (29) for stably propping the grip casing (29) on a plate is made at that casing end.

8. Supplementary device of an inflatable gas balloon (1) according to Claim 1, characterized in that the reflector (15) is made of a synthetic material having a highly white lustre.

9. Supplementary device of an inflatable gas balloon (1) according to Claim 1, characterized in that the electric lamp consists of a base-less lamp bulb (14a) with connection leads to which the electric lead connections (10, 11) are connected.

10. Supplementary device of an inflatable gas balloon (1) according to Claim 7, characterized in that the lamp screw socket (31) in the grip casing (29) is provided with a fixed contact plate (38) at its end, which cooperates with the lamp screw socket (8) both for the transfer of electric current from the battery (30) to the lamp screw base (8) and in the form of a limit stop.

11. Supplementary device of an inflatable gas balloon (1) according to Claim 1, characterized in that a translucent, gas-permeable cap (4) extending the open end of the casing (7) and surrounding the lamp (15), is set upon the open end of the casing (7).

12. Supplementary device of an inflatable gas balloon (1) according to Claim 3, characterized in that the casing bottom (7') conically tapers and ends in a projecting tubular attachment (52) through which the lead connections (6, 10, 11) sealedly pass, and to which the electromechanical coupling (8) or the tube (50, 51, 52) is fastened.

13. Supplementary device of an inflatable gas balloon (1) according to Claim 1, characterized in that the reflector (15) being the holder of a lamp socket (13) for the lamp (14) is latched into the open casing end.

**Revendications**

1. Dispositif d'adaptation d'un ballon à gaz gonflable (1), qui présente un col de ballon (1a) extensible élastiquement, pour le gonflage du ballon (1), avec une tête d'obturation (2) pour le col de ballon (1a) et une lampe électrique (14) servant à l'éclairage intérieur du ballon (1), où un canal d'amenée de gaz (16), obturable vers l'extérieur, est réalisé sur la tête d'obturation (2), pour gonfler le ballon à gaz en passant par la tête d'obturation (2), et la lampe (14) étant reliée, par des liaisons à conducteurs électriques (6,10,11), à un raccord électromécanique (8) extérieur, pour raccorder électriquement la lampe (14) à une source de courant électrique (30), caractérisé en ce que la tête d'obturation (2) est réalisée sous la forme d'un boîtier (7) en forme de coupe, qui présente une extrémité ouverte et une extrémité obturée par un fond (7), et qui est susceptible d'être introduite de façon étanche dans le col de ballon (1a), par son extrémité ouverte, avec une extension élastique du col de ballon (1a), un réflecteur lumineux (15) entourant la lampe électrique (14) étant disposé dans l'extrémité ouverte du boîtier (7), et le canal d'amenée de gaz (16) débouchant vers l'extérieur, à l'extrémité fermée du boîtier (7), et une ouverture de passage de gaz (19) étant réalisée, adaptée au réflecteur.

2. Dispositif d'adaptation d'un ballon à gaz gonflable (1) selon la revendication 1, caractérisé en ce que le raccord électromécanique (8) est réalisé sous forme de culot à vis de lampe (8).

3. Dispositif d'adaptation d'un ballon à gaz gonflable (1) selon la revendication 1, caractérisé en ce que le raccord électromécanique (8) est disposé sur le fond (7') du boîtier (7) ou relié mécaniquement au boîtier (7) par l'intermédiaire d'un tube (50,51,52) fixé au fond (7') du boîtier (7) ou d'un câble électrique (6).

4. Dispositif d'adaptation d'un ballon à gaz gonflable (1) selon les revendications 2 et 3, caractérisé en ce que le culot à vis de lampe (8) est prolongé par une douille de prise (49) qui entoure le tube (50,52) ou le câble (6).

5. Dispositif d'adaptation d'un ballon à gaz gonflable (1) selon la revendication 3, caractérisé en ce que le tube est réalisé sous forme de tube télescopique (50,51) flexible.

6. Dispositif d'adaptation d'un ballon à gaz gonflable (1) selon la revendication 2, caractérisé en ce que le culot à vis de lampe (8) est vissable dans une monture à vis de lampe (31), dans boîtier de prise (29) recevant la source de courant électrique qui se présente sous forme d'au moins une batterie électrique (30).

7. Dispositif d'adaptation d'un ballon à gaz gonflable (1) selon la revendication 6, caractérisé en ce qu'un dispositif de maintien (23), servant à un donner appui résistant au basculement au boîtier de prise (29) sur une plaque, est réalisé sur l'extrémité de boîtier, opposée à la monture à vis de lampe (31), du boîtier de prise (29), de façon à pouvoir être enlevé de l'extrémité de boîtier.

8. Dispositif d'adaptation d'un ballon à gaz gonflable (1) selon la revendication 1, caractérisé en ce que le réflecteur (15) est fabriqué en une matière synthétique présentant un brillant blanc intense.

9. Dispositif d'adaptation d'un ballon à gaz gonflable (1) selon la revendication 1, caractérisé en ce que le lampe électrique se compose d'une ampoule de lampe (14a) sans culot, avec des fils de raccordement auxquels sont raccordés les liaisons à conducteurs électriques (10,11).

10. Dispositif d'adaptation d'un ballon à gaz gonflable (1) selon la revendication 7, caractérisé en ce que la monture à vis de lampe (31) présente dans le boîtier de prise (29), à son extrémité, une plaque de contact fixe (38), qui coopère avec le culot de lampe à vis (8), tant pour transmettre le courant entre la batterie (30) et le culot à vis de lampe (8) qu'également à titre de butée.

11. Dispositif d'adaptation d'un ballon à gaz gonflable (1) selon la revendication 1, caractérisé en ce qu'un capuchon transparent (4), perméable aux gaz et entourant la lampe (15) est appliqué à l'extrémité ouverte du boîtier (7), en le prolongeant.

12. Dispositif d'adaptation d'un ballon à gaz gonflable (1) selon la revendication 3, caractérisé en ce que le fond de boîtier (7') s'effile de façon conique et s'achève en une tubulure (52), faisant saillie vers l'extérieur, à travers laquelle les liaisons à conducteur (6,10,11) passent de façon étanche et à laquelle est fixé le raccord électromécanique (8), respectivement le tube (50,51,52).

13. Dispositif d'adaptation d'un ballon à gaz gonflable (1) selon la revendication 1, caractérisé en ce que le réflecteur (15) réalisé sous forme d'une monture de lampe (13) pour la lampe (14) est encliqueté dans l'extrémité ouverte du boîtier.

*Fig. 1*

Fig. 3

Fig. 2

Fig. 4

Fig. 5

Fig. 6

Fig. 8

Fig. 7

17